## Europäisches Patentamt

## European Patent Office

## Office européen des brevets

(11) Veröffentlichungsnummer: **0 106 839**
A1

# (12) EUROPÄISCHE PATENTANMELDUNG

(21) Anmeldenummer: **83890179.1**

(22) Anmeldetag: **11.10.83**

(51) Int. Cl.³: **A 01 G 25/02**
**A 01 G 25/06, B 05 B 1/20**

(30) Priorität: **11.10.82 AT 3745/82**

(43) Veröffentlichungstag der Anmeldung:
**25.04.84 Patentblatt 84/17**

(84) Benannte Vertragsstaaten:
**BE CH DE FR GB IT LI LU NL SE**

(71) Anmelder: **Poloplast Kunststoffwerk der Eternit-Werke Ludwig Hatschek und der Durit-Werke Kern & Co.
Poloplast-Strasse 1
A-4060 Leonding Oberösterreich(AT)**

(72) Erfinder: **van Breemen, Kors
Helmahof Hausfeldstrasse 172a
A-2232 Deutsch Wagram(AT)**

(74) Vertreter: **Hamburger, Walter A., Dipl.-Ing. et al,
Patentanwälte Dipl.-Ing. Walter A. Hamburger Dipl.-Ing.
Franz Matschnig Mahlerstrasse 9 Postfach 96
A-1015 Wien I(AT)**

(54) Ausflussstück für Bewässerungsanlagen.

(57) Ein Rohr (4), Schlauch od. dgl. ist in Abständen mit Öffnungen (5) für den Wasseraustritt und im Bereich dieser Öffnungen mit dem Ausflußstück versehen, das gegebenenfalls Wasserverteiler (14) aufweist.

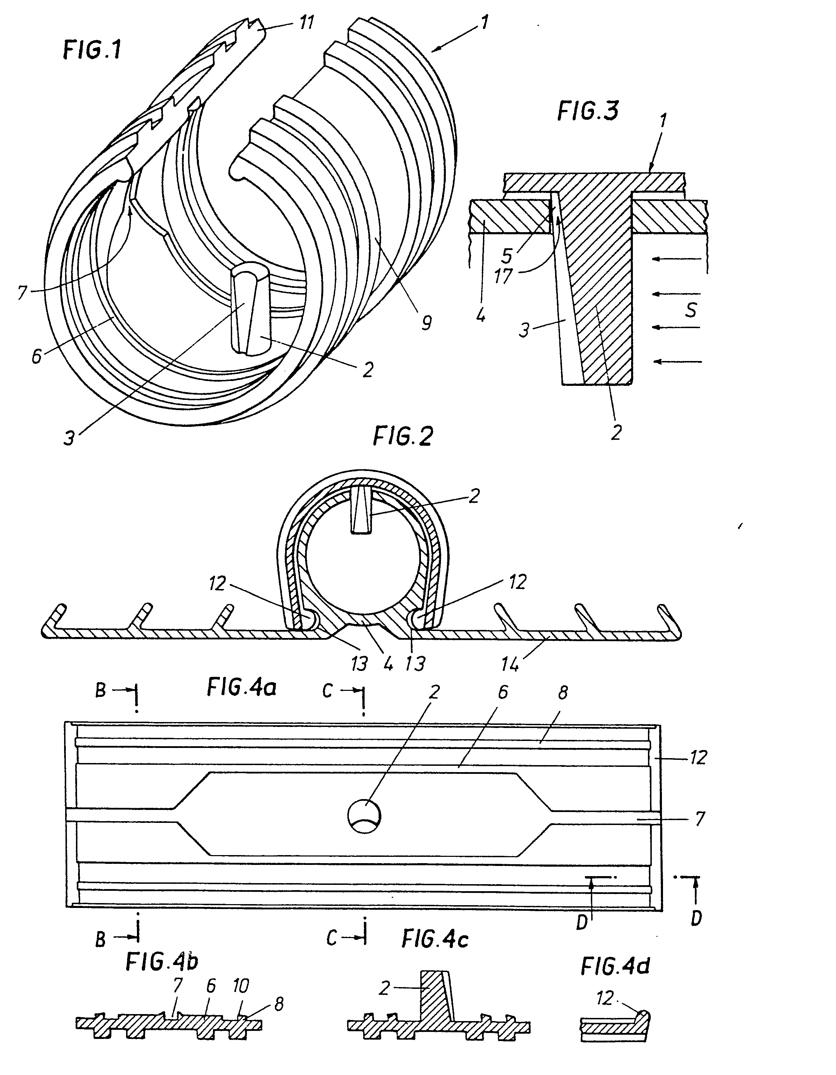

Um die Gefahr von Verstopfungen der Wasseraustrittswege weitgehend herabzusetzen und um den Betrieb der Bewässerungsanlage in einem weiten Druckbereich zu ermöglichen, weist das Ausflußstück (1) einen in die Öffnung (5) steckbaren Zapfen (2) auf, in dem zumindest eine Rinne (3) od. dgl. ausgebildet ist, wobei im Betrieb zumindest ein Teilbereich der Rinne od. dgl. abstromseitig gelegen ist und zumindest dieser Teilbereich mit einem oder mehreren, nach außen führenden und den Wasserausfluß-Querschnitt definierenden Kanälen (7) in Verbindung steht (Fig. 1 und 2).

FIG.1

FIG.2

EP 0 106 839 A1

## 1 Ausflußstück für Bewässerungsanlagen

Die Erfindung bezieht sich auf ein Ausflußstück für eine Bewässerungsanlage mit einem Rohr, Schlauch od. dgl., das in Abständen mit Öffnungen für den Wasseraustritt und im Bereich dieser Öffnungen mit dem Ausflußstück versehen ist und das gegebenenfalls Wasserverteiler aufweist.

Es sind verschiedene Bewässerungsanlagen bekannt, bei welchen ein Rohr in seiner Längsrichtung mit Öffnungen versehen ist, welche dem Wasseraustritt dienen. Bei einer aus der FR-PS 23 31 953 bekannten Anlage ist das Rohr im Bereich dieser Öffnungen von einer Wasserverteilungsmatte umgeben und über diese Matte, die zu beiden Seiten des Rohres verlängert ist, ist eine Manschette gesetzt, die einerseits die Matte an ihrer Stelle hält und andererseits zur Führung des austretenden Wassers dient. Bewässerungsanlagen dieser Art können auf der Erde oder unter dem Erdboden verwendet werden. Nachteilig ist hiebei, daß es leicht zu Verstopfungen der Austrittsöffnungen des Rohres bzw. zu einem Verlegen des Austrittskanals des Wassers zwischen der Austrittsöffnung und dem unteren Ende des Rohres kommen kann, da es praktisch unmöglich ist, das zugeführte Wasser vollständig frei von Verunreinigungen zu halten. Allein schon aus diesem Grunde werden die bekannten Anlagen mit geringem Druck betrieben, da bei höheren Drücken die Verstopfungsgefahr beträchtlich steigt. Es ist daher auch kaum möglich, die Ausflußrate des Wassers in weiteren Grenzen einzustellen.

Ziel der Erfindung ist die Schaffung eines Ausflußstückes für eine Bewässerungsanlage, welches die Gefahr von Verstopfungen der Wasseraustrittswege weitgehend herabsetzt bzw. eliminiert und überdies den Betrieb der Anlage in einem weiten Druckbereich ermöglicht, wodurch die Wasseraustrittsrate in weiten Grenzen einstellbar ist.

Dieses Ziel läßt sich mit einem Ausflußstück der eingangs erwähnten Art erreichen, bei welchem erfindungsgemäß das Ausflußstück einen in die Öffnung steckbaren Zapfen aufweist, in dem zumindest eine Rinne, Auskehlung od. dgl. ausgebildet ist, wobei im Betrieb zumindest ein Teilbereich der Rinne od. dgl. abstromseitig gelegen ist und zumindest dieser Teilbereich mit einem oder mehreren, nach außen führenden und den Wasserausfluß-Querschnitt definierenden Kanälen in Verbindung steht.

Die Erfindung weist zwei wesentliche Merkmale auf, welche die Beseitigung der angeführten Mängel des Standes der Technik ermöglichen. Einerseits führt der abstromseitig gelegene Teilbereich der Rinne bzw. Auskehlung in dem Zapfen dazu, daß in diesem Bereich starke Wasserwirbel auftreten, wodurch ein hoher Selbstreinigungseffekt der Austrittsöffnung erreicht wird. Es ist sogar möglich, während einer Reinigungsphase der Bewässerungsanlage die Strömungsgeschwindigkeit innerhalb des Rohres so weit zu erhöhen, daß eine Saugwirkung auftritt und Wasser bzw. Luft von außen in das Innere des Rohres gesaugt wird, wodurch allfällig vorhandene Verstopfungen wirkungsvoll beseitigt werden können. Zur Festlegung der Wasseraustrittsrate, d.h. zur Druckverminderung, ist jedoch nicht die Rinne bzw. Auskehlung des Zapfens im Zusammenhang mit der Öffnung in dem Rohr vorgesehen sondern gesonderte Kanäle. Die Erfindung ermöglicht somit die stufenlose Regelung der Austrittsrate des Wassers über einen weiten Bereich und verhindert Verstopfungen der Wasseraustrittswege praktisch vollständig. Sie ist weiters im gleichen Maße bei Bewässerungsanlagen anwendbar, die unter dem Boden, auf dem Boden oder über dem Boden angeordnet sind. Insbesondere bei Anlagen, welche für den Einsatz unter dem Boden bestimmt sind, wird das Rohr mit bekannten Wasserverteilern versehen sein, sodaß das austretende Wasser entsprechend verteilt wird.

Eine vorteilhafte Weiterbildung der Erfindung, bei welcher das Ausflußstück als dem - vorzugsweise kreisförmigen - Querschnitt des Rohres angepaßte Manschette ausgebildet ist, zeichnet sich dadurch aus, daß der in die Öffnung einsteckbare Zapfen von der Innenwandung der Manschette absteht und die Manschette an ihrer dem Fußpunkt des Zapfens gegenüberliegenden Seite offen ausgebildet ist und daß an der Innenfläche der Manschette zu beiden Seiten des Zapfens Dichtstege, -flächen, -lippen od. dgl. angeordnet sind, welche im Betrieb zusammen mit der Außenwandung des Rohres und der Innenwandung der Manschette den Wasserausfluß-Querschnitt definieren. Eine derartige Manschette ist bequem an jenen Stellen des Rohres anbringbar, an welchen Wasser austreten soll. Besonders in Verbindung mit Wasserverteilern ist es von Vorteil, daß das Wasser im - üblicherweise unten gelegenen - Bereich der Endkanten der Manschette austreten kann.

Eine zweckmäßige Ausführungsform der Erfindung ist dadurch gekennzeichnet, daß zusätzlich zu den den Ausflußquerschnitt definierenden Kanälen weitere Dichtstege od.dgl. an der Innenwandung der Manschette zur Führung des austretenden Wassers vorgesehen sind. Die weiteren Dichtstege dienen zur zusätzlichen Abdichtung des Wasserweges zwischen Manschette und Rohr, falls die in Zapfennähe gelegenen Dichtstege nicht vollständig dichten und sichern außerdem die korrekte Lage der Manschette auf dem Rohr.

Vorteilhaft ist es, wenn die Dichtstege an ihren Dichtflächen scharfe Kanten aufweisen, da vor allem bei Verwendung von Kunststoffmaterial die Dichtstege ein wenig in die Oberfläche des Rohres einschneiden, wodurch eine besonders gute Abdichtung erzielt wird.

Um den Anpreßdruck der Manschette und somit der Dichtflächen an das Rohr ohne hohen Materialaufwand groß genug halten zu können, ist es zweckmäßig, wenn an der Außenwandung der Manschette in deren Umfangsrichtung verlaufende Verstärkungsringe vorgesehen sind. Hiebei ist es zweckmäßig, wenn die Verstärkungsringe im Bereich der Dichtstege vorgesehen sind.

Es ist von Vorteil, wenn die Manschette aus elastischem Material, vorzugsweise einstückig aus Kunststoff, gefertigt ist und durch Aufweiten zwischen den Endkanten auf das Rohr aufklemmbar ist. Hiedurch ist eine leichte Montage der Manschette an Ort und Stelle möglich. Um einen gut zentrierten Sitz nach Art einer Schnappverbindung zu erreichen, empfiehlt es sich, wenn die Manschette längs eines Teils ihrer Endkanten mit Endwülsten versehen ist, welchen entsprechende Vertiefungen längs des Rohres zugeordnet sind.

Dem erfindungsgemäß angestrebten Selbstreinigungseffekt kommt es sehr zugute, falls an der im Betrieb abstrom gelegenen Seite des Zapfens zumindest eine Rinne ausgebildet ist.

Hiebei kann sich die Rinne bis zum Fußpunkt des Zapfens erstrecken, sodaß das Wasser längs der Rinne durch die Öffnung des Rohres austreten kann.

Es hat sich gezeigt, daß aber auch bei einer Ausführung der Erfindung die Verstopfungsgefahr vernachlässigbar ist, bei welcher die Rinne in einer Entfernung von dem Fußpunkt des Zapfens endet, die etwa der Rohrwandstärke entspricht und daß in dem Zapfen sich von der Rinne bis zu seinem Fußpunkt erstreckende Kanäle vorgesehen sind. Bei dieser Ausführungsform ist es weiters günstig, wenn die Summe der Querschnitte der Kanäle größer ist als die Summe der Querschnitte der den Wasserausfluß-Querschnitt definierenden Kanäle.

Der Selbstreinigungseffekt ist besonders gut, wenn der Querschnitt der Rinne des Zapfens im wesentlichen kreissegmentförmig ist.

Weiters hat es sich als vorteilhaft erwiesen, wenn Tiefe und/oder Breite der Rinne des Zapfens zu dessen Fußpunkt hin abnehmen.

Es hat sich weiters eine Ausführungsform der Manschette als zweckmäßig erwiesen, bei welcher der Zapfen zwei symmetrisch zur Längsmittelebene der Manschette gelegene Rinnen aufweist.

Bei Ausführungsformen der Erfindung, die keine besondere Manschette aufweisen empfiehlt es sich, daß die Rinne, Auskehlung od. dgl. des Zapfens mit seinem vorzugsweise im wesentlichen ebenen Außenende über Bohrungen in Verbindung steht und daß auf das Außenende des Zapfens eine Kappe aufsetzbar ist. Die Kappe schützt einerseits vor Verschmutzung von außen und ergibt andererseits zusammen mit dem Außenende des Zapfens jenen Kanal bzw. Kanäle, der den Wasserausfluß-Querschnitt definiert.

In Hinblick auf einen definierten Wasseraustrittsweg ist es in diesem Zusammenhang günstig, wenn in dem ebenen Außenende des Zapfens Kanäle ausgebildet sind, die mit den Bohrungen in Verbindung stehen und sich außen am Zapfen bis unterhalb des von der Kappe abgedeckten Bereiches weiter erstrecken.

Zur individuellen Einstellung der austretenden Wassermenge können Kappe und Zapfen mit einem Gewinde versehen sein.

Um den Weg des austretenden Wassers eindeutig festzulegen, kann zwischen Kappe und Außenende des Zapfens ein Dichtungsring eingelegt sein.

Wenn das Ende des Zapfens angespitzt ist, kann das Ausflußstück auch auf ein Rohr oder einen Schlauch aufgesetzt werden, der noch keine vorgefertigten Wasseraustrittsöffnungen aufweist. Die entsprechende Öffnung wird beim Aufsetzen

- 6 -

0106839

durch Eindringen des angespitzten Zapfenendes geschaffen.

Um unabhängig von Toleranzen und Maßänderungen einen definierten Austrittsquerschnitt für das Wasser zu erhalten, ist es zweckmäßig, wenn ein Zwischenstück mit einer Hülse und einem Fußteil vorgesehen ist, wobei die Hülse dichtend zwischen Zapfen und Öffnung des Rohres angeordnet ist und in dem auf der Manschetteninnenfläche aufliegenden Außenfläche des Fußteiles eine durchgehende, quer zur Rohrlängsrichtung verlaufende, mit der Rinne des Zapfens in Verbindung stehende Ausflußrille vorgesehen ist und daß an dem in das Rohrinnere vorstehendem Endteil der Hülse ein Dichtwulst vorgesehen ist, der im Bereich der Rinne des Zapfens eine Auskehlung od. dgl. aufweist oder wenn die Manschette in an sich bekannter Weise aus zwei im wesentlichen koaxialen, längs ihrer Längsränder miteinander verbundenen Teilen besteht, wobei zwischen dem Außenteil und dem Innenteil ein Hohlraum belassen ist, der Zapfen von dem Innenteil absteht, und daß der Hohlraum an seinen umfangsseitigen Endbereichen zum Wasseraustritt eingerichtet z.B. mit einem Schlitz versehen ist.

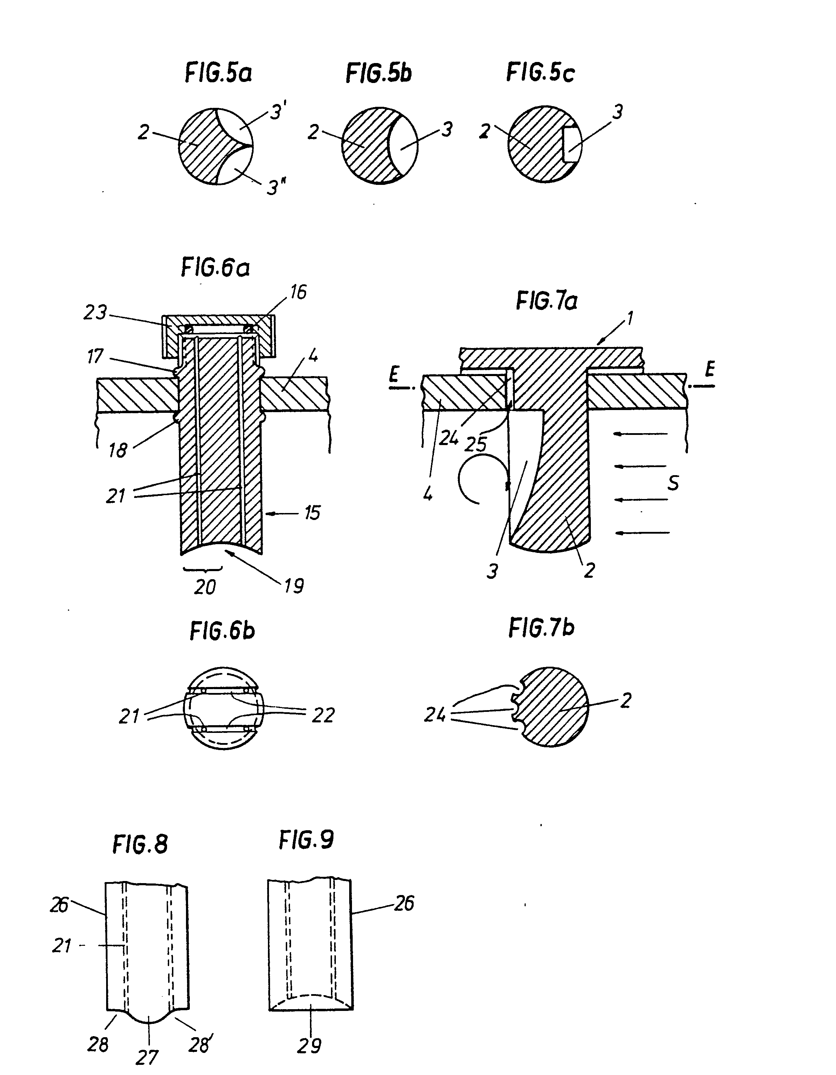

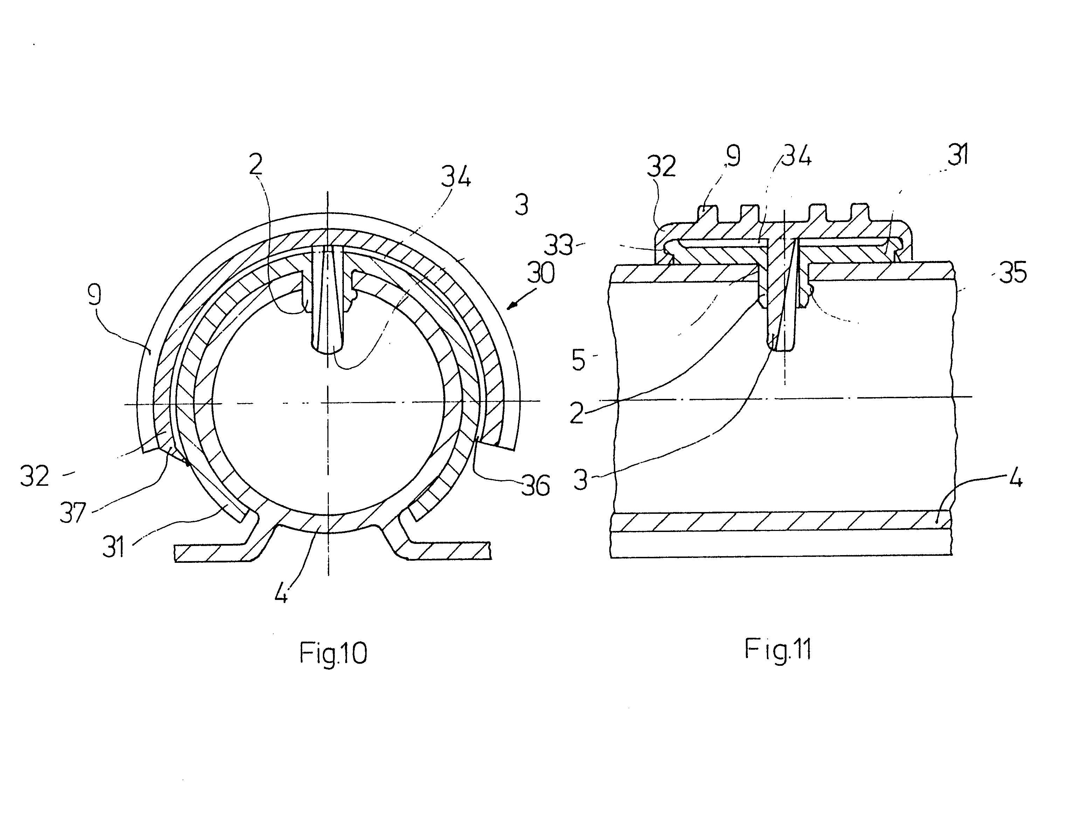

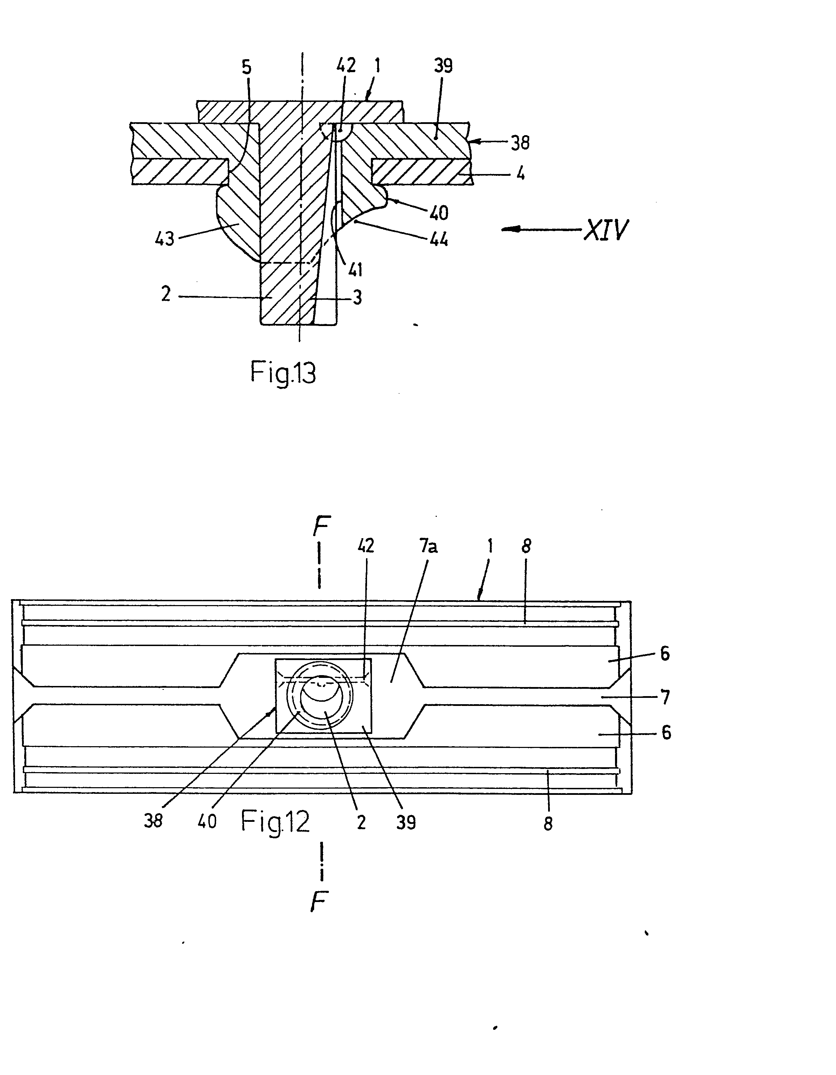

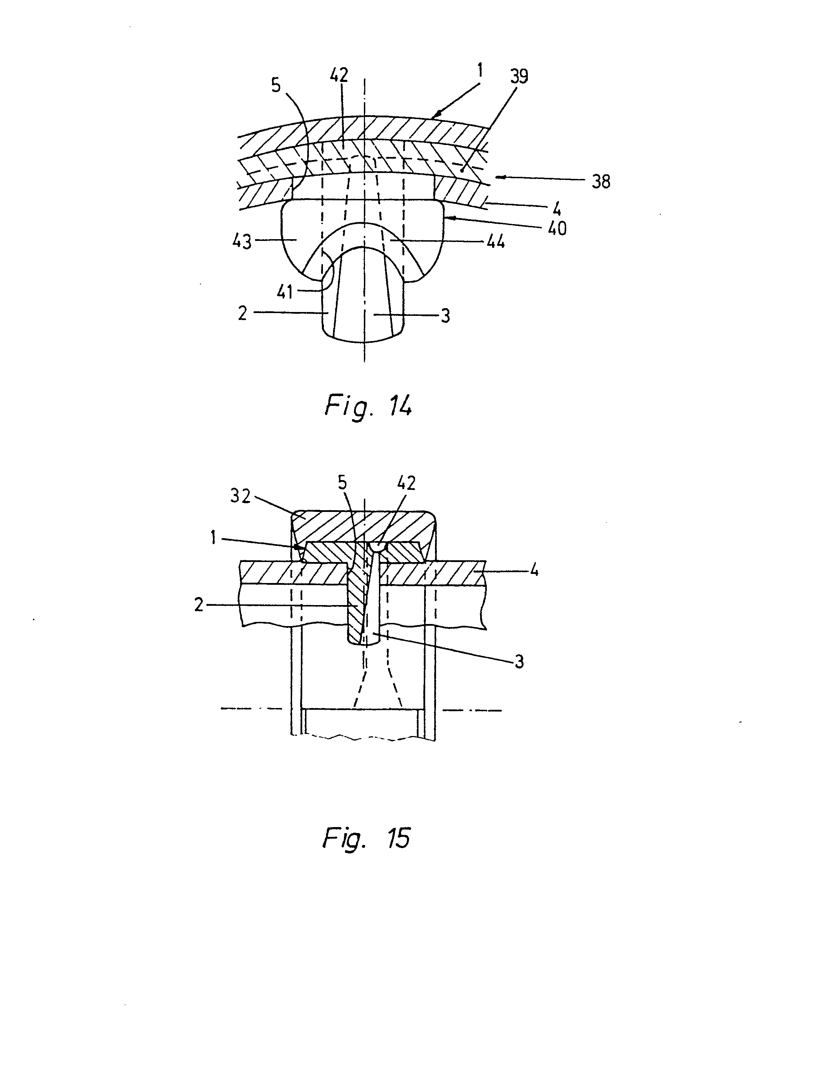

Die Erfindung samt ihren weiteren Vorteilen und Merkmalen ist im folgenden an Hand beispielsweiser Ausführungsformen beschrieben, die in der Zeichnung veranschaulicht sind. In dieser zeigen Fig. 1 eine schaubildliche und vergrößerte Darstellung einer erfindungsgemäßen Manschette, Fig. 2 einen Querschnitt durch ein Bewässerungsrohr mit Wasserverteilern und aufgesetzter Manschette, Fig. 3 eine vergrößerten Schnitt durch ein Rohr mit aufgesetzter Manschette im Bereich des Zapfens, Fig. 4a eine abgewickelte Ansicht auf die Innenfläche einer erfindungsgemäßen Manschette, Fig. 4b einen Schnitt längs der Linie B-B der Fig. 4a, Fig. 4c einen Schnitt längs der Linie C-C der Fig. 4a, Fig. 4d einen Schnitt längs der Linie D-D der Fig. 4a, Fig. 5a-c einen Querschnitt durch drei verschiedene Ausführungsformen eines Zapfens, etwa in dessen Mitte, Fig. 6a ein Ausflußstück nach der Erfindung mit aufgeschraubter Kappe in ein Rohr eingesetzt im Längsschnitt, Fig. 6b eine Draufsicht auf den Zapfen des Ausflußstücks nach Fig. 6a bei abgenommener Kappe, Fig. 7a einen Schnitt wie Fig. 3, jedoch mit einem anders ausgebildeten Zapfen, Fig. 7b einen Schnitt durch den Zapfen längs der Linie E-E der Fig. 7a, die Fig. 8 und 9 die Endbereiche zweier weiterer Ausführungen eines Zapfens, Fig. 10 in einem Schnitt ähnlich Fig. 2 eine weitere Ausführungsform mit doppelwandig ausgeführter Manschette; Fig. 11 einen Längsschnitt durch diese Ausführungsform, Fig. 12 in einer Darstellung ähnlich Fig. 4a eine Ausführung mit einem zusätzlichen Zwischenstück, Fig. 13 einen vergrößerten Längsschnitt durch ein Rohr mit aufgesetzter Manschette nach Fig. 12 im Bereich des Zapfens, im Schnitt nach der Linie F-F, Fig. 14 eine Ansicht dieser Ausführung in Richtung des Pfeiles XIV in Fig. 13 und Fig. 15 einen Längsschnitt durch eine weitere Ausführung.

Gemäß Fig. 1 ist eine z.B. aus Kunststoff gefertigte Manschette 1 zylindrisch ausgebildet, wobei von ihrer Innenwandung ein Zapfen 2 absteht. An der dem Fußpunkt des Zapfens 2 gegenüberliegenden Seite ist die Manschette offen ausgebildet. In dem Zapfen ist eine Rinne 3 ausgeformt, die sich im vorliegenden Fall von dem Ende des Zapfens bis zu dessen Fußpunkt erstreckt und zu diesem hin an Breite und Tiefe zunimmt. Wie den Fig. 2 und 3 entnehmbar, wird die Manschette so auf ein Rohr 4 aufgesetzt, daß der Zapfen 2 durch eine Bohrung 5 des Rohres in dessen Inneres hineinragt, wobei die Rinne in bezug auf die Wasserströmung S stromab gelegen ist. Um ein Ausströmen des Wassers im Sinne des Pfeiles A in Fig. 3 zu ermöglichen, weist die Manschette an ihrer Innenwandung Dichtstege 6 auf, mit denen die Manschette an der Außenwandung des Rohres anliegt. Wie Fig. 1 deutlich entnehmbar, sind die Stege 6 so geformt, daß sie längs zumindest eines Teils der Innenwandung der Manschette einen definierten Austrittskanal 7 bilden, der von den Dichtstegen 6, der Innenwandung der Manschette und der Außenwandung des Rohres 4 begrenzt wird. Zusätzlich zu den Dichtstegen 6 sind beidseits weitere Dichtstege 8 vorgesehen.

Die Anordnung der Dichtstege geht aus Fig. 4a hervor, der insbesondere entnommen werden kann, daß die Stege 6 zu beiden Seiten des Zapfens 2 Verbreiterungen aufweisen, sodaß zwischen ihnen der bereits erwähnte Kanal 7 gebildet wird. Dieser Kanal 7 ist auch im Schnitt nach Fig. 4b zu sehen. Um eine genügende Anpreßkraft der Manschette 1 und somit auch der Dichtstege 6 bzw. 8 an der Außenwandung des Rohres 4 zu erreichen, sind an der Außenwandung der Manschette 1 im Bereich der Dichtstege 6 bzw. 8 umlaufende Verstärkungsringe 9 vorgesehen. Auf diese Weise wird bei verhältnismäßig geringem Materialaufwand eine genügend hohe Anpreßkraft erreicht. Im Sinne einer guten Abdichtung bei verhältnismäßig geringer Anpreßkraft liegt es auch, wenn, wie dies etwa den Fig. 4b und 4c entnehmbar ist, die Dichtstege 6 bzw. 8 an ihren Dichtflächen scharfe Kanten 10 aufweisen. Diese Kanten können durch entsprechende Abschrägung der Dichtstege erreicht werden, es ist jedoch auch möglich, die Endflächen der Dichtstege 6 bzw. 8 eben zu halten und auf diese entsprechend dünne Rillen aufzusetzen, die - ebenso wie die scharfen Kanten 10 - in das Material des Rohres 4 ein wenig einschneiden und somit eine gute Abdichtung ergeben.

Die Manschette 1 kann längs eines Teils ihrer Endkanten mit Endwülsten 12 versehen sein, wie dies die Fig. 2, Fig. 4a und 4d zeigen. Wenn man in dem Rohr 4 entsprechende Längsvertiefungen 13 ausbildet, kann die Manschette durch Aufweiten zwischen ihren Endkanten 11 auf das Rohr geschoben werden, wobei der Zapfen 2 in die Öffnung 5 eindringt und schließlich die Endwülste 12 nach Art einer Schnappverbindung in die Vertiefungen 13 des Rohres 4 einrasten.

Im Betrieb dringt das Wasser längs des in Fig. 3 gezeigten Pfeiles A durch die Rinne 3 in den durch die Höhe der Stege 6 bestimmten Spaltraum zwischen der Außenfläche des Rohres 4 und der Innenfläche der Manschette 1 und gelangt durch den Kanal 7 bis zu den Endkanten der Manschette. Hier kann das Wasser ungehindert austreten und - etwa bei der Ausführungsform nach Fig. 2 - längs Wasserverteilflächen 14 weiter ausgebreitet werden. Da die Rinne 3 stromab gelegen ist, erfolgt eine starke Wirbelbildung im Bereich der Rinne, sodaß Fremdkörper kaum durch die Rinne und die Öffnung 5 des Rohres durchtreten können. Diese Wirbelbildung wird umso stärker, je höher die Strömungsgeschwindigkeit des das Rohr durchfließenden Wassers ist. Es kann sogar eine besondere Reinigungsphase im Betrieb einer Bewässerungsanlage vorgesehen sein, während der das Wasser mit hoher Geschwindigkeit das Rohr 4 durchströmt, sodaß nicht nur eine Wirbelbildung im Bereich der Rinne sondern auch ein starker Unterdruck in diesem Bereich auftreten wird, sodaß das Wasser nicht mehr durch die Öffnung 5 nach außen gelangt sondern vielmehr Wasser bzw. Luft von außen in das Innere des Rohres gesaugt werden. Solchermaßen können allfällig festhaftende Verunreinigungen aus den Wasserdurchflußwegen gelöst werden. Die Form der Rinne 3 ist zweckmäßigerweise kreissegmentförmig gestaltet, wie dies in Fig. 5b dargestellt ist. Es ist auch möglich, in den Zapfen 2 zwei symmetrisch zur Längsmittelebene der Manschette 1 gelegene Rinnen 3', 3" auszubilden (Fig. 5a). Die Rinne kann aber auch rechteckförmigen Querschnitt aufweisen (Fig. 5c).

Die erfindungsgemäße Manschette kann zusammen mit Bewässerungsanlagen verwendet werden, deren Rohre, allfällig zusammen mit Wasserverteilern, unter der Erde, auf der Erde oder über der Erde verwendet werden. Zweckmäßig ist es, einen im wesentlichen geschlossenen Wasserkreislauf vorzusehen, wobei das Wasser mittels einer Kreiselpumpe od. dgl. durch den Kreislauf gepreßt wird. Das ständig austretende Wasser muß selbstverständlich von außen dem Kreislauf zugeführt werden. Da bei einer derartig geschlossenen Bewässerungsanlage ständig eine verhältnismäßig hohe Wasserströmung innerhalb des Rohres 4 aufrechterhalten wird, entfaltet die Erfindung hier besonders ihre Vorteile, da die Wirbelbildung an der stromabgelegenen Seite des Zapfens 2 voll zur Geltung kommt. In einer derartigen Anlage ist auch die stufenlose Steuerung der Ausflußrate des Wassers möglich, was etwa durch eine Regelung der Drehzahl der Kreiselpumpe in Abhängigkeit von Feuchtigkeitssensoren erfolgen kann.

Es ist zwar in den meisten Fällen zweckmäßig, ein besonderes Rohr im Zusammenhang mit der erfindungsgemäßen Manschette zu verwenden, doch kann die Manschette auch zusammen mit einem üblichen Rohr oder auch einem Schlauch verwendet werden, soferne die Oberfläche des Rohres bzw. Schlauches genügend glatt ist, um die erforderliche Dichtwirkung zwischen den Dichtstegen und der Oberfläche zu erzielen. Es müssen, etwa in einem Schlauch, nicht einmal Bohrungen bzw. Öffnungen 5 vorhanden sein, wenn man den Zapfen 2 an seinem Ende zuspitzt und aus genügend hartem Material macht. In diesem Fall werden die Manschetten an vorbestimmten Stellen auf den Schlauch aufgebracht, wobei der angespitzte Zapfen 2 durch die Schlauchwandung tritt und hiebei die erforderliche Öffnung geschaffen wird.

Fig. 6a und 6b zeigen eine Ausführungsform der Erfindung, die ohne Manschette verwendbar ist und im wesentlichen aus einem Zapfen 15 und einer aufschraubbaren Kappe 16 besteht. Der Zapfen 15 ist in das Rohr 4 gedrückt und dank zweier Umfangswülste 17,18, die in einem der Wandstärke des Rohres 4 entsprechenden Abstand am Zapfen 15 ausgebildet sind, in seiner Lage gehalten. Das innere Ende des Zapfens 15 ist mit einer Auskehlung 19 versehen, deren durch eine Klammer angedeuteter Bereich 20 bei Annahme einer Wasserströmung S von links abstromseitig gelegen ist. Von dieser Auskehlung 19 führen vier Bohrungen 21 in Längsrichtung durch den Zapfen 15 bis zu seiner im wesentlichen ebenen Außenseite. In dieser sind zwei Kanäle 22 ausgebildet, die mit den Enden der Bohrungen 21 in Verbindung stehen und sich über die um die Umfangskante des Zapfens 15 an dessen Außenseite nach unten ein Stück fortsetzen. Auf den Zapfen 15 ist die Kappe 16, allenfalls unter Zwischenschaltung eines weichen Dichtringes 23 aufgeschraubt.

Im Betrieb der Bewässerungsanlage strömt das Wasser durch die Bohrungen 21 an die Außenseite des Zapfens 15, wobei zufolge der Wirbelbildung im Bereich der Auskehlung 19 die dort befindlichen Öffnungen der Bohrungen 21 ständig gereinigt werden bzw. die Gefahr, daß Verstopfungen der Bohrungen 21 auftreten, hiedurch sehr herabgesetzt ist. Aus diesem Grund können die Bohrungen 21 sehr kleinen Durchmesser aufweisen, z.B. ab 0,1 mm, und den Austrittsquerschnitt des Wassers festlegen. An dem Außenende des Zapfens 15 fließt das durch die Bohrungen 21 austretende Wasser durch die Kanäle 22 ins Freie. Es sei erwähnt, daß bei geeigneter Formgebung der Kanäle oder durch von der Innenfläche der Kappe 16 abstehende, in die Bohrungen 21 senkbare Noppen, Stifte od. dgl. eine Regelung der Wasseraustrittsmenge durch Verschrauben der Kappe 16 möglich ist. In diesem Fall wird der Austrittsquerschnitt durch die Lage der Kappe 16 bezüglich des Zapfens 15 festgelegt. Die Kappe 16 muß nicht aufschraubbar sein, es ist auch möglich, eine Schnapp- oder Bajonettverbindung zwischen Kappe 16 und Zapfen 15 vorzusehen. Der untere Rand der Kappe 16 kann bei aufgesetzter Kappe bis zur Außenfläche des Rohres 4 reichen und dessen Krümmung angepaßt sein. Auch kann sich der Rand der Kappe konisch erweitert nach unten bis zur Rohroberfläche erstrecken, wodurch ein besonders guter mechanischer Schutz erreicht wird.

Eine weitere Ausführungsform der Erfindung ist in den Fig. 7a und 7b dargestellt, wobei der in Zusammenhang mit der Manschette 1 beschriebene Zapfen 2 wie gemäß Fig. 3 eine Rinne 3 besitzt, die sich jedoch nur soweit erstreckt, daß sie bei in das Rohr 4 eingestecktem Zapfen 2 bloß bis zur Rohrwandung reicht. Um den Wasserdurchtritt nach außen zu ermöglichen, ist der Zapfen in seinem kreisrunden Fußbereich mit mehreren, im vorliegenden Fall mit drei, Auslaßkanälen 24 bzw. Rinnen versehen, die bis zum Fußpunkt des Zapfens an der Manschette 1 reichen. Die Summe des Querschnittes dieser Kanäle sollte größer sein als der durch die Kanäle 7 (Fig. 1) definierte maximale Austritts-

querschnitt. Die durch Einschneiden der Rinne 3 im Zapfen 2 entstandene obere Fläche 25 kann mit Vorteil die gleiche Krümmung aufweisen, wie die Innenwandung des Rohres 4.

Fig. 8 zeigt das innere Ende eines im Zusammenhang mit der Erfindung verwendbaren Zapfen 26, wobei durch eine quer zur Rohrlängsrichtung verlaufende Ausbuchtung 27 zwei Auskehlungen 28, 28' geschaffen sind, von welchen eine immer stromab gelegen ist. Der Auslaß des Wassers erfolgt durch Bohrungen 21 wie nach Fig. 6a, b doch können ebensogut Kanäle entsprechend Fig. 7a, b vorgesehen sein. Ebenso ist es möglich, bei jenen Ausführungsformen der Erfindung, die eine Manschette aufweisen, Zapfen entsprechend der Ausführungen nach Fig. 6a, b, 8 und 9 zu verwenden. In diesem Fall muß dafür Sorge getragen werden, daß im Fußbereich des Zapfens das Wasser aus den Bohrungen 21 austreten kann. Der Zapfen 26 nach Fig. 9 unterscheidet sich von der vorgehend beschriebenen Ausführung dadurch, daß er an seinem Innenende eine rotationssymmetrische, konkave Auskehlung 29 besitzt, die ersichtlich immer einen abstromseitig gelegenen Bereich aufweist. Fig. 10 und 11 zeigen eine Ausführungsform der Erfindung, die gleichfalls als auf das Rohr aufsteckbare Manschette 30 ausgebildet ist, jedoch wird hier das austretende Wasser nicht zwischen der Außenwandung des Rohres und der Innenwandung der Manschette geführt, sondern in einem Hohlraum 31 der doppelwandig ausgeführten Manschette 30.

Bei einer Ausführung nach Fig. 1 bis 4 ist der zwischen Innenwandung der Manschette und Außenwandung des Rohres 4 liegende, in die Kanäle 7 mündende Hohlraum hinsichtlich seines Volumens und seiner Geometrie unter Umständen erheblichen Schwankungen unterworfen, wofür folgende Ursachen vorliegen können: Maßtoleranzen bei der Herstellung von Rohr bzw. Manschette, Abweichungen des Rohrquerschnittes von der Kreisform, unerwünschte Krümmung in Längsrichtung, verschiedene Wärmeausdehnungskoeffizienten der Werkstoffe von Rohr und Manschette, schlechter Sitz der Manschette, insbesondere bei höheren Betriebstemperaturen sowie als Folge von Materialermüdung. Die genannten Schwankungen können zu entsprechenden selbstverständlich unerwünschten Schwankungen der Ausflußraten führen. Die in den Fig. 10 und 11 gezeigte Ausführungsform der Erfindung bringt demgegenüber eine Verbesserung. Wie ersichtlich ist eine Manschette 30 zweiteilig ausgeführt, wobei ein Innenteil 31 mit einem konzentrischen Außenteil 32 an den Längsrändern 33 unter Bildung eines Hohlraumes 34 verbunden ist. Der Innenteil 31 ist mit einem Zapfen 2 versehen, der bei Aufsetzen der Manschette 30 auf ein Rohr 4 in die Bohrungen 5 des Rohres 4 ragt. Zur Erzielung einer guten Abdichtung kann der Zapfen 2 mit einem Wulst 35 versehen sein, der an der Innenwandung des Rohres 4 anliegt. Der Zapfen 2 kann dem Zapfen z.B. nach Fig. 1 entsprechen und ist mit einer Rinne 3 versehen.

Wie auch bei der Ausführung nach Fig. 1 bis 4 sind am Außenumfang der Manschette mehrere Verstärkungsringe bzw. -rippen 38 vorgesehen. Zwischen dem umfangsseitigen Ende des Außenteils 32 und dem Innenteil verbleibt ein Schlitz 36 (Fig. 10, rechte Hälfte), aus dem das durch die Rinne 3 und durch den Hohlraum 34 fließende Wasser austreten kann. Es ist möglich, und dies ist in der linken Hälfte der Fig. 10 gezeigt, am umfangsseitigen Ende des Außenteils eine Dichtlippe 37 vorzusehen, die gegen Eindringen von Schlamm, Wurzeln od. dgl. schützt. Auch können die Endbereiche der Manschette 30 analog zur Ausführung nach Fig. 2 ausgebildet sein und Endwülste 12 aufweisen. Auch kann der Hohlraum 34 gegen die Endbereiche der Manschette 30 zu, von Kanälen begrenzt sein (vgl. Kanäle 7 in Fig. 4a).

In den Fig. 12 bis 14 ist schließlich eine Variante der Erfindung dargestellt, die - ausgehend von der Ausführung nach Fig. 1 bis 4 - ein Zwischenstück zwischen Manschette 1 und Rohr 4 vorsieht. Eine Manschette 1, ähnlich der in Fig. 1, 2 und 4a dargestellten, weist einen von ihrer Innenfläche abstehenden Zapfen 2 auf, der mit einer sich bis zu dem Fußpunkt erstreckenden Rinne 3 versehen ist. Weiters sind wiederum Dichtstege 6 und 8 vorgesehen, wobei die Stege 6 einen Kanal 7 definieren. Dieser Kanal erweitert sich im Zapfenbereich zu einer Kammer 7a, die bei auf das Rohr 4 gesetzter Manschette von der Innenfläche der Manschette, den Dichtstegen 6 und der Außenwandung des Rohres 4 begrenzt ist.

Wie bereits erwähnt, können auf verschiedenen Ursachen beruhende Änderungen der Geometrie von Rohr und Manschette bei der Ausführung nach Fig. 1 bis 4 zu unerwünschten Änderungen des Wasseraustrittsquerschnittes führen. Um diesen Querschnitt bereits in der Manschette alleine zu definieren, ist ein Zwischenstück 38 vorgesehen, das aus einem rechteckförmigen Fußteil 39 und aus einer Hülse 40 besteht.

Das Zwischenstück 38 wird über den Zapfen 2 geschoben, sodaß es mit der Außenfläche des Fußteiles 39 an der Manschetteninnenfläche anliegt (Fig. 13). Es wird mit der Manschette 1 durch Kleben oder Schweißen verbunden. Der Zapfen 2 paßt formschlüssig in die Bohrung 41 der Hülse 40.

In der Außenfläche des Fußteiles 39 ist eine Ausflußrille 42 ausgebildet, die quer zur Längserstreckung des Rohres 4 verläuft und mit der Rinne 3 des Zapfens 2 in Verbindung steht. Um eine gute Abdichtung und einen festen Sitz gegenüber dem Rohr 4 zu erzielen, ist der in das Rohrinnere vorstehende Endteil der Hülse 40 mit einem Dichtwulst 43 versehen, der im Bereich der Rinne 3 des Zapfens 2 eine Auskehlung 44 aufweist.

Im Betrieb fließt das Wasser aus dem Rohr durch die Rinne 3 in die Ausflußrille 42 und von hier in die linke bzw. rechte Hälfte der Kammer 7a, die als Ausgleichskammer dient, und schließlich durch den Kanal 7 nach außen. Der Vorteil der eben beschriebenen Ausführung liegt darin, daß die Ausflußrille 42, unabhängig z.B. von Maßänderungen des Rohres 4 einen definierten Ausflußquerschnitt festlegt.

Fig. 15 zeigt eine weitere Variante der Erfindung im Längsschnitt. Diese Variante besteht aus einer Manschette 1 samt Zapfen 2 und einem Außenteil 32. Die Manschette 1 und der Außenteil 32 sind im Vergleich zu den vorstehend erläuterten Ausführungsformen sowie zum Durchmesser des Schlauches 4 verhältnismäßig schmal. Der mit einer Rinne 3 versehene Zapfen 2 ist unmittelbar in die Öffnung 5 des Schlauches 4 eingesetzt. An der Außenseite der Manschette 1 ist im Bereich der Rinne 3 eine Ausflußrille 42 ausgebildet, die über die gesamte Länge der den Schlauch 4 über einen Winkel von etwa 180° umgebenden Manschette 1 reicht und mit der Rinne 3 in Verbindung steht. Die Manschette 1 und der Außenteil 32 sind einander derart angepaßt, daß sie unter Schließung der Ausflußrille 42 aneinanderliegen. An den Enden der Manschette 1 ist die Ausflußrille 42 zweckmäßigerweise erweitert.

Die Vorteile dieser Variante liegen darin, daß der Schlauch 4 unter stärkerer Krümmung aufgerollt oder Unebenheiten des Bodens angepaßt werden kann, ohne daß es zu Verformungen der Öffnung 5 des Schlauches 4 kommen kann. Auf diese Weise kann der Schlauch 4 den Gegebenheiten des Geländes gut angepaßt werden und es ergibt sich ein gutes Anliegen und eine gesicherte Abdichtung auch bei stärkeren Krümmungen. Außerdem bietet diese Variante die Vorteile eines geringen Material- und Herstellungsaufwandes.

Patentansprüche:

1. Ausflußstück für eine Bewässerungsanlage mit einem Rohr, Schlauch od. dgl., das in Abständen mit Öffnungen für den Wasseraustritt und im Bereich dieser Öffnungen mit dem Ausflußstück versehen ist und das gegebenenfalls Wasserverteiler aufweist, dadurch gekennzeichnet, daß das Ausflußstück (1; 15, 16) einen in die Öffnung (5) steckbaren Zapfen (2, 15, 26) aufweist, in dem zumindest eine Rinne (3), Auskehlung (19, 28) od. dgl. ausgebildet ist, wobei im Betrieb zumindest ein Teilbereich (20) der Rinne od. dgl. abstromseitig gelegen ist und zumindest dieser Teilbereich (20) mit einem oder mehreren, nach außen führenden und den Wasserausfluß-Querschnitt definierenden Kanälen (7,22) in Verbindung steht.

2. Ausflußstück nach Anspruch 1, das als dem - vorzugsweise kreisförmigen - Querschnitt des Rohres angepaßte Manschette ausgebildet ist, dadurch gekennzeichnet, daß der in die Öffnung (5) einsteckbare Zapfen (2) von der Innenwandung der Manschette (1) absteht und die Manschette (1) an ihrer dem Fußpunkt des Zapfens (2) gegenüberliegenden Seite offen ausgebildet ist und daß an der Innenfläche der Manschette (1) Dichtstege (6), -flächen, -lippen od.dgl. angeordnet sind, welche zusammen mit der Außenwandung des Rohres (4) und der Innenwandung der Manschette (1) zur Führung des austretenden Wassers vorgesehen sind.

3. Ausflußstück nach Anspruch 2, dadurch gekennzeichnet, daß zusätzlich zu den den Ausflußquerschnitt definierenden Kanälen (7, 22) weitere Dichtstege (8) od.dgl. an der Innenwandung der Manschette (1) zur Führung des austretenden Wassers vorgesehen sind.

4. Ausflußstück nach Anspruch 2 oder 3, dadurch gekennzeichnet, daß die Dichtstege (6, 8) an ihren Dichtflächen scharfe Kanten (10) aufweisen.

5. Ausflußstück nach einem der Ansprüche 2 bis 4, gekennzeichnet durch an der Außenwandung der Manschette (1) vorgesehene, in Umfangsrichtung verlaufende Verstärkungsringe (9).

6. Ausflußstück nach Anspruch 5, dadurch gekennzeichnet, daß die Verstärkungsringe (9) im Bereich der Dichtstege (6,8) vorgesehen sind.

7. Ausflußstück nach einem der Ansprüche 2 bis 6, dadurch gekennzeichnet, daß die Manschette aus elastischem Material, vorzugsweise einstückig aus Kunststoff, gefertigt ist und durch Aufweiten zwischen den Endkanten auf das Rohr (4) aufklemmbar ist.

8. Ausflußstück nach Anspruch 7, dadurch gekennzeichnet, daß die Manschette längs eines Teils ihrer Endkanten (11) mit Endwülsten (12) versehen ist, welchen entsprechende Vertiefungen (13) längs des Rohres (4) zugeordnet sind.

9. Ausflußstück nach einem der Ansprüche 2 bis 8, dadurch gekennzeichnet, daß an der im Betrieb abstrom gelegenen Seite des Zapfens (2) zumindest eine Rinne (3) ausgebildet ist.

10. Ausflußstück nach Anspruch 9, dadurch gekennzeichnet, daß sich die Rinne (3) bis zum Fußpunkt des Zapfens (2) erstreckt.

11. Ausflußstück nach Anspruch 9, dadurch gekennzeichnet, daß die Rinne (3) in einer Entfernung von dem Fußpunkt des Zapfens (2) endet, die etwa der Rohrwandstärke entspricht und daß in dem Zapfen (2) sich von der Rinne (3) bis zu seinem Fußpunkt erstreckende Kanäle (24) vorgesehen sind.

12. Ausflußstück nach Anspruch 11, dadurch gekennzeichnet, daß die Summe der Querschnitte der Kanäle (24) größer ist als die Summe der Querschnitte der den Wasserausfluß-Querschnitt definierenden Kanäle (7).

13. Ausflußstück nach einem der Ansprüche 9 bis 12, dadurch gekennzeichnet, daß der Querschnitt der Rinne (3) des Zapfens (2) im wesentlichen kreissegmentförmig ist.

14. Ausflußstück nach einem der Ansprüche 9 bis 13, dadurch gekennzeichnet, daß Tiefe und/oder Breite der Rinne (3) des Zapfens (2) zu dessen Fußpunkt hin abnehmen.

15. Ausflußstück nach einem der Ansprüche 9 bis 14, dadurch gekennzeichnet, daß der Zapfen (2) zwei symmetrisch zur Längsmittelebene der Manschette (1) gelegene Rinnen (3', 3") aufweist.

16. Ausflußstück nach Anspruch 2 und 9 und einem der Ansprüche 3 bis 8 und 10 bis 15, dadurch gekennzeichnet, daß ein Zwischenstück (38) mit einer Hülse (40) und einem Fußteil (39) vorgesehen ist, wobei die Hülse (40) dichtend zwischen Zapfen (2) und Öffnung (5) des Rohres angeordnet ist und in dem auf der Manschetteninnenfläche aufliegenden Außenfläche des Fußteiles (39) eine durchgehende, quer zur Rohrlängsrichtung verlaufende, mit der Rinne (3) des Zapfens (2) in Verbindung stehende Ausflußrille (42) vorgesehen ist und daß an dem in das Rohrinnere vorstehendem Endteil der Hülse (40) ein Dichtwulst (43) vorgesehen ist, der im Bereich der Rinne (3) des Zapfens (2) eine Auskehlung (44) od. dgl. aufweist.

17. Ausflußstück nach Anspruch 1, das als dem - vorzugsweise kreisförmigen - Querschnitt des Rohres angepaßte Manschette ausgebildet ist, dadurch gekennzeichnet, daß die Manschette (30) in an sich bekannter Weise aus zwei im wesentlichen koaxialen, längs ihrer Längsränder (33) miteinander verbundenen Teilen (31, 32) besteht, wobei zwischen dem Außenteil (32) und dem Innenteil (31) ein Hohlraum (34) belassen ist, der Zapfen (2) von dem Innenteil (31) absteht, und daß der Hohlraum (34) an seinen umfangsseitigen Endbereichen zum Wasseraustritt eingerichtet z.B. mit einem Schlitz (36) versehen ist.

18. Ausflußstück nach Anspruch 1, dadurch gekennzeichnet, daß die Rinne, Auskehlung (19, 28, 29) od. dgl. des Zapfens (15, 26) mit seinem vorzugsweise im wesentlichen ebenen Außenende über Bohrungen (21) in Verbindung steht und daß auf das Außenende des Zapfens eine Kappe (16) aufsetzbar ist.

19. Ausflußstück nach Anspruch 18, dadurch gekennzeichnet, daß in dem ebenen Außenende des Zapfens (15) Kanäle (22) ausgebildet sind, die mit den Bohrungen (21) in Verbindung stehen und sich außen am Zapfen (15) bis unterhalb des von der Kappe (16) abgedeckten Bereiches weitererstrecken.

20. Ausflußstück nach Anspruch 18 oder 19, dadurch gekennzeichnet, daß Kappe (16) und Zapfen (15) mit einem Gewinde versehen sind.

21. Ausflußstück nach Anspruch 19 oder 20, dadurch gekennzeichnet, daß zwischen Kappe (16) und Außenende des Zapfens (15) ein Dichtring (23) eingelegt ist.

22. Ausflußstück nach einem der Ansprüche 1 bis 21, dadurch gekennzeichnet, daß das Ende des Zapfens angespitzt ist.

FIG.1

FIG.3

FIG.2

FIG.4a

FIG.4b    FIG.4c    FIG.4d

FIG.5a  FIG.5b  FIG.5c

FIG.6a

FIG.7a

FIG.6b

FIG.7b

FIG.8  FIG.9

Fig.11

Fig.10

Fig.13

Fig.12

Fig. 14

Fig. 15

Europäisches
Patentamt

# EUROPÄISCHER RECHERCHENBERICHT

EP  83 89 0179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 811 392 (H. WARP) <br> * Spalte 2, Zeilen 43-56; Abbildungen 2,5 * | 1 | A 01 G 25/02 <br> A 01 G 25/06 <br> B 05 B 1/20 |
| X | US-A-1 527 222 (A.E. RASMUSSEN) <br> * Anspruch 1; Abbildungen 1,2 * | 1 | |
| A | US-A-3 292 378 (ROSENTHAL) <br><br> * Anspruch 1; Abbildungen 3,5 * | 1,2,18 ,19 | |
| A | US-A-3 240 434 (BRADLEY) | | |
| A,D | FR-A-2 331 953 (A.V. JUNGHANI) | | |
| A | DE-A-2 630 609 (J. LEAL-DIAZ) | | RECHERCHIERTE SACHGEBIETE (Int. Cl. ³) |
| A | GB-A- 624 196 (C.S. ALLEN) <br><br> ----- | | A 01 G 25/00 <br> B 05 B 1/00 |

Der vorliegende Recherchenbericht wurde für alle Patentansprüche erstellt.

| Recherchenort <br> DEN HAAG | Abschlußdatum der Recherche <br> 12-01-1984 | Prüfer <br> ANTONUCCI C.M. |
|---|---|---|